# EUROPEAN PATENT APPLICATION

(11) **EP 2 416 245 A1**
(43) Date of publication of application: **08.02.2012**
(21) Application number: 11154784.0
(22) Date of filing: 17.02.2011
(51) Int. Cl.: G06F 9/445

(54) **User terminal and method of managing application of the terminal**

(30) Priority: 02.08.2010 JP 2010173789
(71) Applicant: Kabushiki Kaisha Toshiba, Tokyo 105-8001 (JP)
(72) Inventor: Kataoka, Hideo, Tokyo 105-8001 (JP); Hoshino, Hiromi, Tokyo 105-8001 (JP)
(74) Representative: Henkel, Breuer & Partner

(57) **Abstract**

According to one embodiment, a data transceiver 770 accepts a newly application file, and a setting information processor 722 transfers and copies setting information described in a setting information area of an existent application file, to a corresponding setting information area of the newly application file.

## Description

Embodiments described herein relate generally to a user terminal, and a method of managing an application of the same terminal.

It is necessary to input various setting information when a new application is installed in an apparatus such as a personal computer which executes an application. Setting information includes administrator identification data, application using device identification data, and addresses. When a partner device is previously known in a private communication network, it may be necessary to set partner identification data and address.

When the above application is newly installed, the above information is set for the new application. In other words, similar information setting is necessary whenever a new application is installed.

A screen layout to input setting information is different for each application, and the user sets information on an input screen for each application.

A general architecture that implements the various features of the embodiments will now be described with reference to the drawings. The drawings and the associated descriptions are provided to illustrate the embodiments and not to limit the scope of the invention.
FIG. 1 is an exemplary block diagram showing a configuration of an embodiment;
FIG. 2 is an exemplary diagram showing an example of environment, in which the units of the embodiment shown in FIG. 1 are used;
FIG. 3 is an exemplary diagram showing an example of setting information to be set in an application file;
FIGS. 4A and 4B show examples of operation display when an application file is downloaded to a user terminal;
FIG. 5 is an exemplary flowchart for explaining an example of operation of a user terminal;
FIGS. 6A and 6B show examples of operation display of a user terminal;
FIG. 7 shows examples of display when setting information is input to a user terminal; and
FIG. 8 shows examples of operations of applications when setting information of a first application is transferred and described to a second application.

Various embodiments will be described hereinafter with reference to the accompanying drawings.

It is an object of an embodiment to provide a user terminal, which easily and automatically transfers setting information of an application file to a setting information area of another application file, and a method of managing an application of the user terminal.

In general, according to one embodiment, there is provided a user terminal which accepts an application file, and manages the accepted application file by an application manager, the application file including setting information, and operates a plurality of devices via a network.

A data transceiver is configured to accept a newly application file. And a setting information processor is configured to transfer and copy setting information described in a setting information area of an existent application file, to a corresponding setting information area of the newly application file.

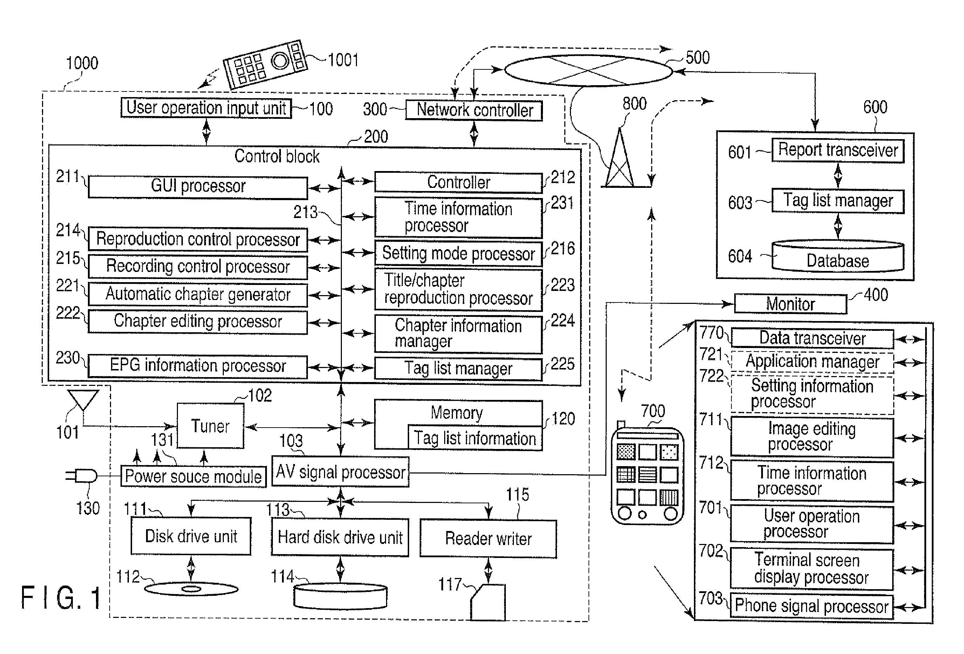

The embodiment will now be described in more detail with reference to the accompanying drawings. In FIG. 1, reference number 1000 denotes a recording/reading apparatus. The recording/reading apparatus 1000 may be used solely, or be connected to a television receiver. Reference number 1001 denotes a remote controller for operating the recording/reading apparatus 1000.

An operation signal from the remote controller 1001 is received by a user operation input unit 100, and interpreted by a controller (main controller) 212 contained in a control block 200. If the operation signal from the remote controller 1001 is a command for power on, a power supply module 131 connected to a plug 130 is activated. As a result, the main power supply of the recording/reading apparatus 1000 is turned on. The auxiliary power supply of the apparatus 1000 is always kept in the ON state for receiving, for example, a remote controller signal.

Assume here that the operation signal from the remote controller 1001 indicates a command for selecting a broadcast signal, i.e., selecting a TV program. A high-frequency signal is input to a tuner 102 via an antenna 101. The tuner 102 receives and demodulates a signal corresponding to a designated TV program, and supplies the resultant signal to an AV processor 103. The AV processor 103 selectively executes, on the input signal, various types of processing (such as scanning line conversion, resolution conversion, luminance correction, color phase adjustment and noise reduction processing), and supplies an output signal to a monitor 400.

The control block 200 comprises a graphic user interface (GUI) processor 211, and an electronic program guide (EPG) information processor 230. The EPG information processor 230 can acquire electronic program guide information via a network or the tuner 102. The acquired electronic program guide information is stored in, for example, a memory 120, and is updated regularly. When a user wants to see a program table, they operate the remote controller 1001 to request a menu. Upon receiving the request, the controller 212 instructs the GUI processor 211 to output a menu image. The GUI processor 211 reads menu image data form the memory 120, and supplies it to the AV signal processor 103. As a result, the menu image is displayed on the monitor 400. The menu image includes an item (icon) for program table display. When the user operates a cursor to select the program table display item (icon) and press a determination button, the GUI processor 211 reads the electronic program guide information from the memory 120 and supplies it to the AV signal processor 103. The AV signal processor 103 processes the input electronic program guide information, and outputs a program table to the monitor 400. As a result, the program table is displayed on the monitor 400. When the user moves the cursor over the program table to select a desired program name (icon) and press the determination button, a program corresponding to the selected program name is received and displayed.

Also when the user reserves and programs the recording of a TV program, they operate an operation key for programming the recording of a TV program. Also in this case, the program table is displayed on the monitor 400, and the user moves the cursor over the program table to select a desired program and press the determination button, whereby the recording of the desired program is reserved and programmed. At this time, a recording destination medium, to which the desired program is to be recorded, can be designated. The destination medium is, for example, an optical disk (such as a DVD and a blue-ray disk) 112, a hard disk 114 and a memory card 117. When data is recorded on or read from the optical disk 112, the control block 200, the disk drive unit 11 and the AV signal processor 103 work together. Similarly, when data is recorded into or read from the memory card 117, the control block 200, a reader writer 115 and the AV signal processor 103 make a combination work together.

When access to the above-mentioned recording media is controlled to execute read processing, a read control processor 214 incorporated in the control block 200 performs total control. On the other hand, when record processing is executed, a record control processor 215 incorporated in the control block 200 performs total control. For instance, the read and record control processors 214 and 215 execute control of operation timing between the AV signal processor 103, and the disk drive unit 111, the hard disk 114 or the reader writer 115. When reading or recording is performed, the read control processor 214 or the record control processor 215 controls reading or recording in accordance with a reading mode or a recording mode set in a setup mode processor 216. In the case of reading, the setup mode includes a double-speed reading mode, a resolution change mode and an aspect ratio setting mode. In the case of recording, the setup mode includes a resolution setting mode and a recording speed setting mode.

The control block 200 further comprises an automatic chapter generating unit 221, a chapter editing unit 222, a title/chapter read processor 223, a chapter information managing unit 224, and a tag list managing unit 225.

The automatic chapter generating unit 221 can set chapter separation information in arbitrary positions in content (e.g., positions corresponding to the start and end of a commercial, or positions detected at regular intervals). For instance, information on positions corresponding to the start and end of a commercial is generated as time information indicating the time periods elapsing from the start of each TV program. The elapsed time information (chapter information) is managed in the form of a table by the chapter information managing unit 224 along with a title name with chapters. The chapter information is stored in the memory 120 along with, for example, the title name.

In the automatic chapter generating unit 221, a chapter may be generated when a TV program (content) corresponding to a broadcast signal is received and recorded, or when a TV program (content), which is already received and recorded in a recording medium, is read from the recording medium. In any case, when chapter information is generated, the user designates chapter automatic generation via a menu screen. The setup mode processor 216 manages whether a chapter automatic generation mode is set. The user can edit chapters. For instance, when a chapter editing item is selected on the menu screen, the chapter editing unit 222 incorporated in the control block 200 is activated. The chapter editing unit 222 controls the memory 120 to display title names with chapter information on the monitor 400. If the user designates one of the title names, the chapter editing unit 222 refers to the chapter information corresponding to the title name. After that, the chapter editing unit 222 generates, for example, a thumbnail corresponding to the start portion of each chapter, and a thumbnail corresponding to the end portion of each chapter, and controls the recording medium, the AV signal processor 103, the memory 120, etc., to display the thumbnails on the monitor 400. This enables the user to designate a thumbnail or a chapter, or to execute editing, such as deletion of a chapter, or combining chapters, using the cursor while viewing the monitor 400.

The control block 200 further comprises the tag list managing unit 225. The "tag" is defined as image period designating time information indicating, for example, the start and end times of content. As a short image period, a period of one frame or a period of several tens frames may be defined. The image period is not limited to the short one, but may be defined as a longer period (e.g., 3 or 6 minutes).

Various methods can be used to generate tag information. For instance, there is a method of designating a tag identification name (it may be a tag list name, or a chapter name, or another identification name input as text data) and a tag generation interval (time interval). The time interval ranging from the start of a tag to the end of the tag may be designated. Further, there is a method of generating a tag at the leading part of a chapter. The tag list managing unit 225 collects thus-generated tags and generates tag list information (including pairs of tag information items). The tag list managing unit 225 transfers the generated tag list as tag list information to the memory 120 and stores the same in the memory 120.

The control block 200 also incorporates time information processor 231. The time information processor 231 stores time difference information, described later, and corrects a time difference in operation between a user terminal 700 and the recording/reading apparatus 1000.

The recording/reading apparatus 1000 is connected to a network 500 via a network controller 300. The network may be a home network or an external network. A data managing server 600 is connected to the network 500, and a base station 800 is also connected to the network 500. The base station 800 and the user terminal 700 can communicate with each other. The user terminal 700 can function as, for example, a mobile phone.

The user terminal 700 can communicate with the recording/reading apparatus 1000. In this case, the user terminal 700 and the recording/reading apparatus 1000 may communicate with each other via the base station 800, or may directly communicate with each other using a transceiver incorporated in the recording/reading apparatus 1000.

The data managing server 600 can communicate with the recording/reading apparatus 1000 connected to the network, and with the user terminal 700. The data managing server 600 may be a set top box or an external remote server. The data managing server 600 comprises a report transceiver 601, a tag list managing unit 603 and a database 604. The tag list managing unit 603 manages tag information, sent from the recording/reading apparatus 1000, along with, for example, a title name or a chapter name, and can store the resultant information as tag list information in the database 604.

In the form of tag information, the title name exists as higher order data, and the tag list name exists as lower order data. Accordingly, a plurality of tag lists can be generated under one title name. For instance, users A and B can generate respective unique tag lists in accordance with their tastes.

The user terminal 700 includes a data transceiver 770, and a user operation processor 701. The operation signal generated by user's operation is detected by the user operation processor 701. The user terminal 700 includes a liquid crystal or LED display, and activates an operation screen when necessary. Various types of image content, editing of images (e.g., image enlargement, image contraction, etc.), and image switching, are controlled by a terminal screen display processor 702 in accordance with user's operation input. Further, phone signals are processed by a phone signal processor 703.

The user terminal 700 also comprises an image editing processor 711 and a time information processor 712. The image editing processor 711 enables the user to see the monitor 400, and simultaneously to read image information of a desired title from the memory of the recording/reading apparatus 1000 and edit the information, by means of the user terminal 700. Namely, the image editing processor 711 includes an application for transmitting a video editing request to the recording/reading apparatus 1000. Thus, the user terminal 700 can be operated as if the remote controller 1001 is operated. Editing processing enables content to be partially deleted or to be combined with other content.

The user terminal 700 can register, in a setting information processor 722, various devices to operate. The processing associated with setup information is mainly executed by the setting information processor 722. Further, applications for operating the registered devices are stored in an application file and managed by an application manager 721. The application manager 721 can generate an application list.

The time information processor 712 is provided to detect a deviation of the time of outputting an image on the monitor 400, from the time of operating the user terminal 700, when the user terminal 700 is used to, for example, execute editing processing, or generate tag-associated information. For instance, assume that images A, B, C, D, E, F, G, H, I, ... are output from the recording/reading apparatus 1000, and that when the image C is output, the user transmits, for example, a signal for suspending the above operation. The recording/reading apparatus 1000 receives and analyzes the signal, and then executes the suspension. In this case, the recording/reading apparatus 1000 may actually execute the suspension when the image F is output. This is because the signal is transmitted from the user terminal 700 to the apparatus 1000 via a network.

To avoid this, in this system, the user terminal 700 is designed to transmit absolute time information along with the suspension instructing signal. Similarly, the recording/reading apparatus 1000 is designed to transmit, to the user terminal 700, a response signal and absolute time information (indicating the time when suspension is executed) immediately after the suspension is actually executed. This absolute time information is monitored by the time information processor 231. The absolute time information indicates, for example, a current time point detected in common by the recording/reading apparatus 1000 and the user terminal 700.

Based on the difference between the absolute time information (indicating the time point when the operation for requesting suspension is executed) sent by the user terminal 700, and the absolute time information (indicating the time point when suspension is actually executed) sent from the recording/reading apparatus 1000, the user terminal 700 can obtain time difference information indicating the time required to actually execute suspension after the operation for requesting the suspension is executed. The user terminal 700 sends the time difference information to the recording/reading apparatus 1000. The recording/reading apparatus 1000 utilizes this information for image output. Namely, when executing subsequent suspension, the apparatus 1000 reads an image frame located at the position previous to the current position by the time difference, and outputs the read image frame as the frame located at the suspended position. Further, when time information is generated as information indicating a separation position (such as a chapter), the time difference information is used to determine a time advanced from the absolute time reported by the user terminal 700, and time information for a chapter is generated based on the advanced time. This time information is stored in the time information processor 231 and used for correcting a relative time period. The relative time period is an elapsed time period elapsing from the start of reading of content (the time of reading the beginning portion of the content is set to 0).

It is preferable that the outputs of clock circuits with an automatic time synchronizing function, contained in, for example, the recording/reading apparatus 1000 and the user terminal 700, be used as the absolute time.

Although in the above description, the user terminal 700 is a cell-phone, it may be a personal computer. Similarly, the data managing server 600 may be a personal computer.

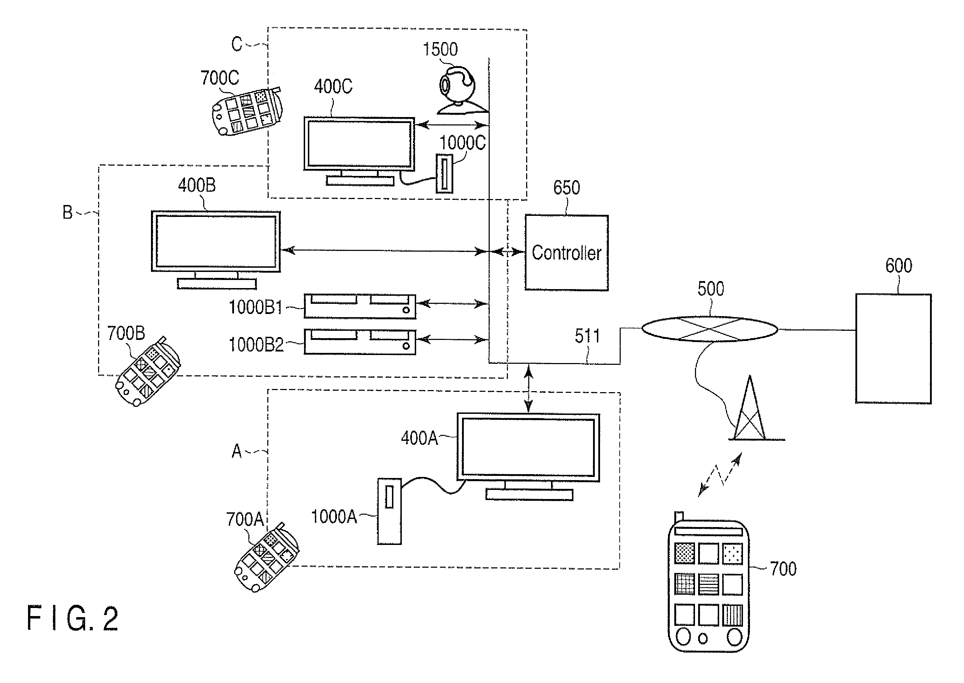

FIG. 2 shows an example of environment in which the units of the above embodiment are used. The network 500 may be a home network or an external network. A home LAN 511 leading to each room is installed. A television receiver 400A is installed in a room A. The television receiver 400A is to be connected to a recording/reproduction unit 1000A having a hard disc drive. In a room B, a television receiver 400B, and recording/reproduction units 1000B1 and 1000B2 are installed. The television receiver 400B is used as a monitor as explained in FIG. 1. In a room C, a television receiver 400C is installed. The television receiver 400C is connected to a recording/reproduction unit 1000C having a hard disk drive. An imaging camera 1500 is installed in the room C.

The above units are connected to the home LAN 511, and their identification data is registered in the user terminal 700. Therefore, the user terminal 700 can specify a desired unit by its identification data, and operate the specified unit. The user terminal 700 may be prepared in each room. A user terminal 700A may be held by a person using the room A, the user terminal 700B may be used by a person using the room B, and the user terminal 700C may be held by a person using the room C.

The home LAN 511 is connected to a controller 650 which controls the power supplies of the devices used in the home, and makes adjustment for data transfer, as an arbitrator.

Information to identify the units, such as television receivers 400A and 400B, recording/reproduction units 1000A, 1000B1 and 1000B2, and data management server 600, is to be registered in the user terminal 700. Therefore, any unit can be controlled by the user terminal 700 by specifying identification data, and sending a control command signal. For example, it is possible to turn on/off and to select a channel of the television receiver 400A. The recording/reproduction units 1000A, 1000B1 and 1000B2 can be operated in the similar manner to the recording/reproduction unit 1000 explained above.

The user terminal 700 may communicate with each unit through an external base station, or directly communicate with the television receiver 400 by infrared rays.

The data management server 600 may be installed in a house, or at a remote location outside a house. In either case, the user terminal 700 communicates with each unit through an external base station.

In the above configuration, if a tag list is saved in the data management server 600, another user can access it by using a similar user terminal.

Various methods have been developed for communication between the units connected to a network. Any method may be used alone, or may be combined with another method. Each unit has an IP address, and an authentication function.

If the user terminal 700 is used instead of a remote controller, an application to operate various units needs to be installed in the user terminal 700. Various applications are developed by many companies, and various applications having new functions are put on the market. On a network, a new recording/reproduction unit is added, and an old unit is replaced by a new one.

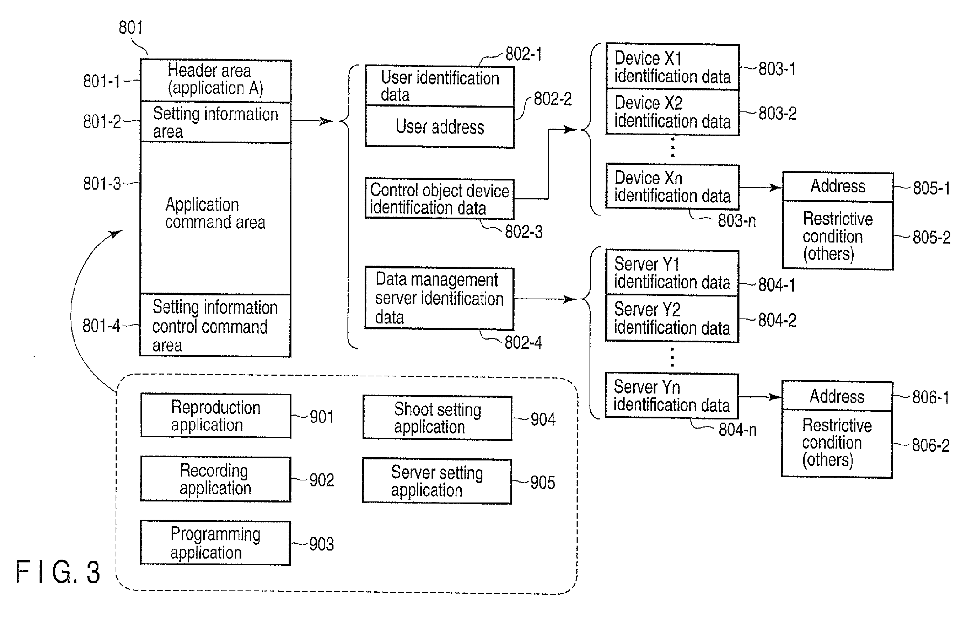

FIG. 3 shows an example of configuration (data configuration) of an application file 801. The application file 801 is basically provided with a header area 801-a, a setting information area 801-2, and an application command area 801-3. In this embodiment, a setting information control command area 801-4 may be provided.

The header area 801-1 is used to describe application identification data indicating the kind and type of an application, and a version number.

The setting information area 801-2 is used to describe setting information entered by the user by using the operation unit. The described content includes user identification data 802-1, and user address 802-2 (e.g. IP addresses, mail addresses). The setting information area 801-2 is used to describe control object device identification data 802-3. As a control object device, there are television receivers, a recording/reproduction unit, a hard disk drive, a video camera, and so on, as explained in FIG. 2. Information to identify a data management server used as a server is also registered. A data management server is one of control object devices. Here, an application for setting a server is assumed, and information to identify a server is peculiarly specified to allow a plurality of servers.

The area to describe the control object device identification data 802-3 stores device X1 identification data 803-1, device X2 identification data 803-2,..., device Xn identification data 803-n, the devices are to be connected to a network. Further, each device identification data includes a device address and restrictive conditions. Restrictive conditions include prohibition of deletion and transfer of recorded programs for a recording-reproduction unit, and prohibition of selection of reception channels for a television receiver.

The area to describe the data management server identification data 802-4 stores device Y1 identification data 804-1, device Y2 identification data 804-2,..., device Yn identification data 803-n, the devices are to be connected to a network. Each device identification data includes a device address and restrictive conditions.

An application file 801 is available in various types, for example, a reproduction application file 901, a recording application file 902, a programming application file 903, a shoot setting application file 904, and a server setting application file 905. These application files may be changed when a control object device is upgraded. Different recording and reproduction application files may be used for devices of different manufacturers.

In such a case, the user needs to input setting information to a setting information area of an application. In particular, if the user terminal 700 is as small as a cell-phone, the input operation is burdensome. The user is required to expend much effort to do such operation for each application.

Therefore, the terminal is provided with a device, which collectively transfers and copies the setting information of a setting information area registered in a first application file, to a second application file.

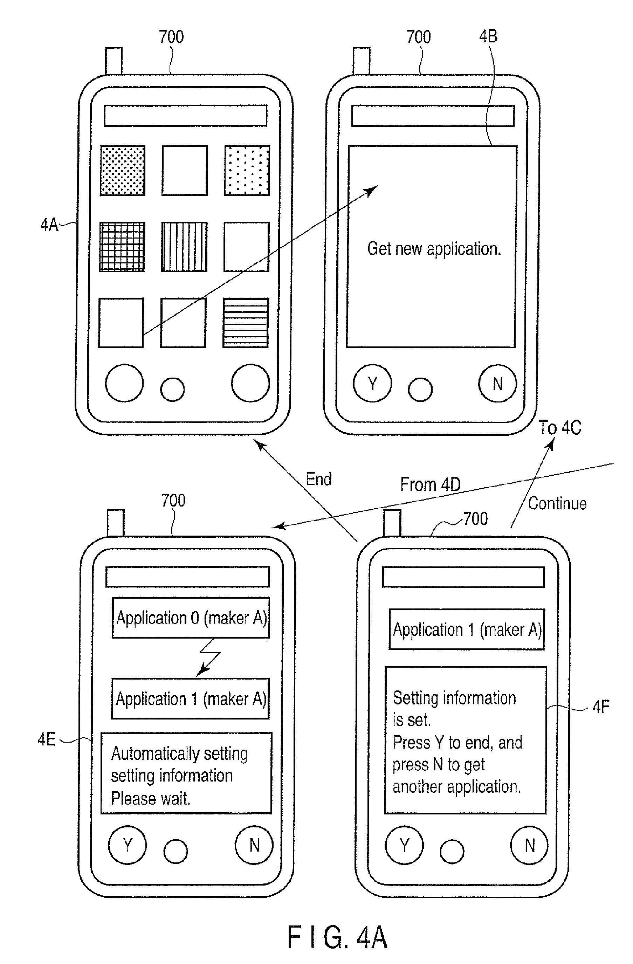

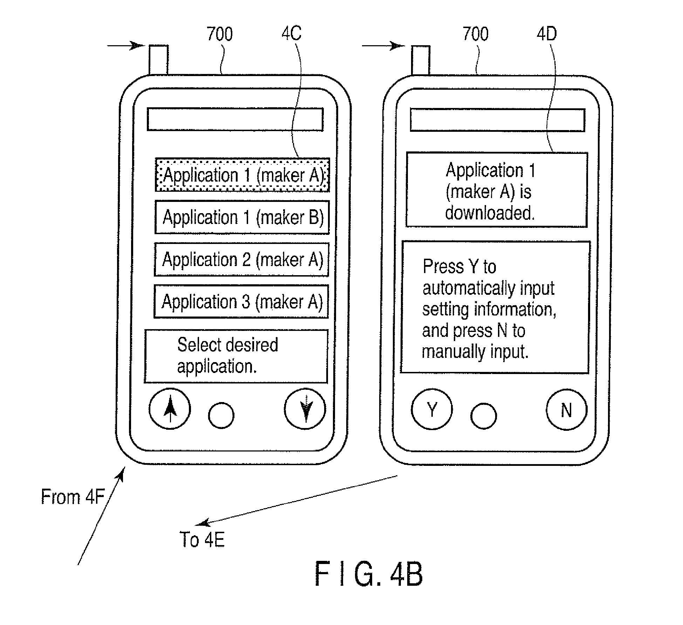

FIGS. 4A and 4B show examples of display in the user terminal 700. When an application get button is touched on a menu screen 4A, a message "Get New Application" appears on a comment screen 4B. Application data is obtained from a server through the Internet, and an application list is generated. The server may be a server of each manufacturer, or an application management server prepared separately.

In the stage of the comment screen 4B, applications may be narrowed down load. In other words, the user may input the kinds and manufacturers of applications, and device names to be controlled by an application. Based on the narrow-down information, the user terminal 700 gets application data, and generates an application list. Application data includes the names, versions, and manufacturers of applications.

When an application list is generated, a list of obtained applications is displayed on a list screen 4C. The user selects a desired application by moving a cursor, and determines the application by touching the application indicated by the cursor, for example. The cursor can be moved by touching an arrow button, and the application screen 4C can be scrolled.

By touching the application 1 (maker A), the application 1 (maker A) is downloaded. When the downloading is completed, a comment screen 4D appears and prompts to set setting information automatically or manually. An application can be installed by other methods, for example, by using a memory card or a personal computer.

When the user selects a button for automatic input of setting information, an automatic setting screen 4E appears. When the automatic setting is completed, a setting end screen 4F appears. The user can finish the automatic setting, or continue the selection to install another application.

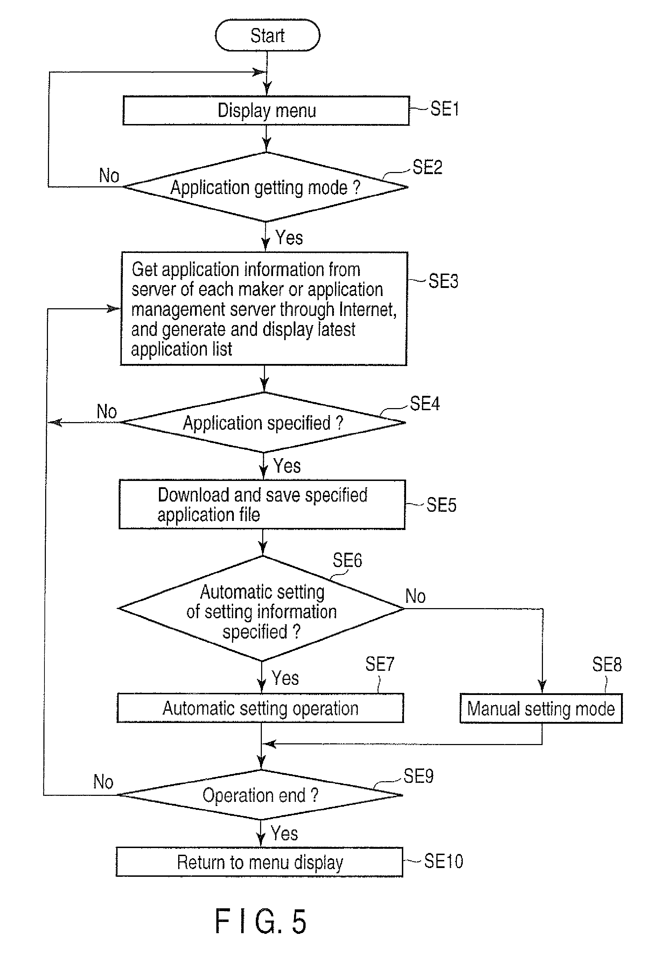

FIG. 5 shows a flowchart of operations of the user terminal 700 for installing an application file. In the user terminal 700, the application manager 721 (FIG. 1) and setting information processor 722 (FIG. 1) are mainly used.

When an instruction to install an application is input on the menu screen(step SE1), application data is obtained from each manufacturer's server or an application management server through the Internet, and an application list is generated and displayed (step SE3).

Next, when an application is selected from the list on the screen (step SE4), a file of the selected application is downloaded and saved. If automatic setting of setting information is selected, setting information is automatically set (step SE7). If automatic setting is not selected, manual setting mode takes place, and setting items are displayed on the screen. The user manually inputs identification data and other data to specified blank columns (step SE8).

When the input operation is completed (step SE9), an instruction to determine whether to continue installation of application is waited. When the end button is pressed, the menu screen appears again. When the continue button is selected, an application list is displayed again.

A setting information control command area shown in FIG. 3 will be explained. This area is prepared as an option, for example. A setting information control command is used to copy the setting information of an application file F1-10 of maker A to the setting information of an application file F2-11 of maker B. In this case, as the formats of the setting information of the maker A and maker B are different, the addresses described in the files may be different. In such a case, the maker A and maker B describe their address conversion tables or commands in the setting information control command area. This makes it possible to automatically copy setting information to application files of different makers.

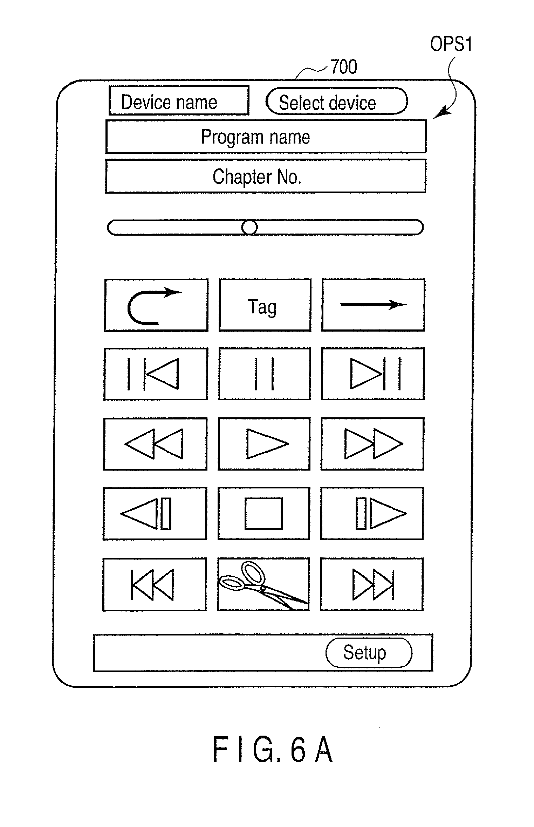

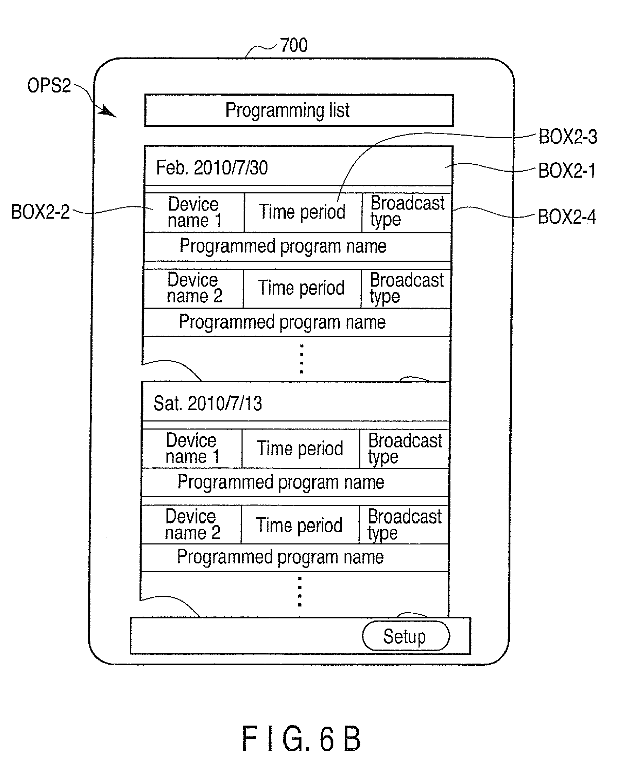

FIGS. 6A and 6B show examples of operation display of the user terminal 700. FIG. 6A shows an operation screen OPS1 by an application for operating a device. FIG. 6B shows an operation screen OPS2 by an application for programming to record a program for a device. For example, when the user operates the user terminal and the user terminal displays a device list from a main menu, and the user touches a display button displaying a desired device name, the operation screen OPS1 shown in FIG. 6A is displayed. To change the selected device, the user touches a device selection button. The screen is changed to an operation screen for the next device. The operation screen OPS1 has a stop button, a play button, a pause button, a fast-forward button, a frame advance button, and a cut button for editing. When a setup button is touched on this screen, a setting screen described later is displayed.

The operation screen OPS2 is for an application for programming a program. A programming screen displays a box BOX1-1 to input a programming date, a box BOX1-2 to input a device name, a box BOX1-3 to input a recording time period, and a box BOX1-4 to input a type of broadcasting (e.g. terrestrial digital media broadcasting, satellite broadcasting, etc.).

To input desired data in these boxes, the user presses a programming button not shown in the drawing, similarly to operating a remote controller. An electronic program table is displayed on a television screen (monitor 400). The user moves a cursor to the position of a desired program on the electronic program table, and presses a setup button. The desired program is programmed for recording, and data is automatically input to the boxes BOX1-1 to BOX1-4. The input data uses the data of the electronic program table. The input data is sent to the user terminal 700. The user terminal 700 has a cursor button and a setup button, which are not shown in the drawing.

The above example explains that when an operation object is different, a different application is activated in the user terminal 700. Various applications are used now, and various applications will be created and provided.

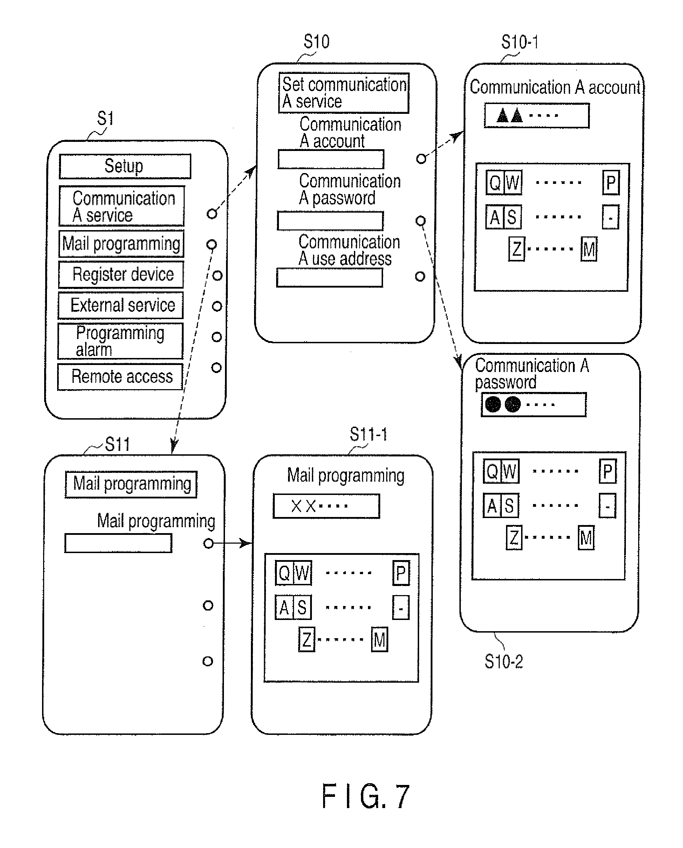

FIG. 7 shows examples of information to be set when an application is installed to the user terminal 700. Setting information includes HDEX service, to which an application used by the user terminal 700 belongs. To receive or accept the HDEX service, it is necessary to describe an HDEX account. For this purpose, an HDEX account input screen is necessary. Screens S1, S10 and S10-1 of the user terminal 700 are examples of reaching the screen to input an HDEX account by sequentially switching screens. An HDEX password is necessary to receive the HDEX service. An HDEX password input screen is necessary to describe an HDEX password. Screens S1, S10 and S10-2 of the user terminal 700 are examples of reaching the screen to input an HDEX password by sequentially switching screens. In addition, an HDEX usage address is necessary to receive the HDEX service. The user needs to manually input an HDEX usage address on a HDEX usage address input screen in the similar manner.

Setting information needs to include information for programming by mail. Screens S1, S11 and S11-1 of the user terminal 700 are examples of reaching a screen to input the information for programming by mail by switching screens.

If the above operations are performed whenever an application is installed, the user is required to expend much time and effort to input setting information to the user terminal.

To solve such a problem, the user terminal automatically transfers the setting information set in a first application to a second application by itself or by cooperating with an application, and a second application automatically takes in the setting information, or the setting information is automatically described.

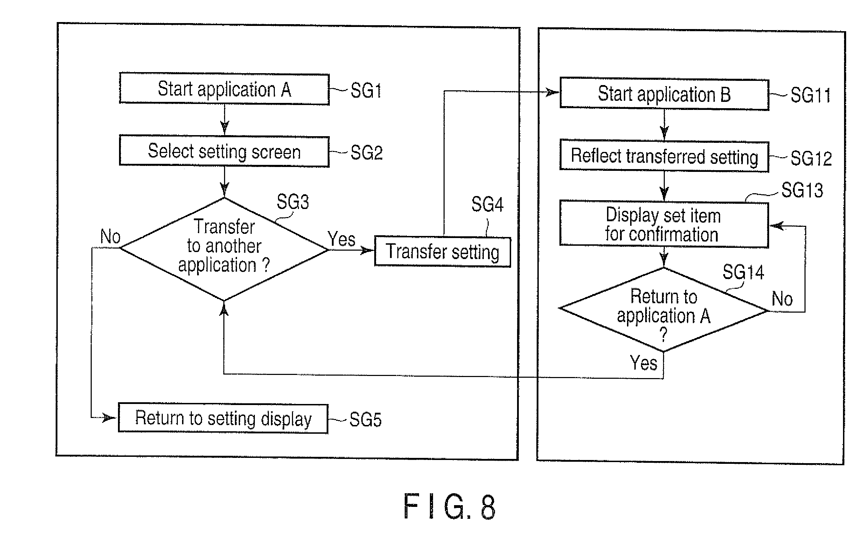

FIG. 8 shows a flowchart of operations when setting information described in an application A is automatically transferred and set to an application B. It is assumed that first and second applications have been loaded into the user terminal 700, and managed by the application manager 721. Setting information has been set in the first application, but not in the second application.

When the first application A is started (step SG1), an operation screen by the first application A is displayed, and a setup button is displayed (in the lower part of the screens in FIGS. 6A and 6B). When the user touches the setup button, a setting screen for the first application A is displayed (S1 in FIG. 7). Setting information has been set in the first application A at this time, and the user is asked to modify the setting information, or to transfer the setting information to another application. This question is made on the screen.

When the user selects "Transfer setting information to another application", transfer of the setting information is started (step SG4). If the user selects "Modify setting information", the setting screen is displayed again(step SG5). This screen is S1 in FIG. 7. A not-shown "Return" button is also displayed on each screen. When the "Return" button is touched, the screen is returned to a previous screen.

When the transfer of setting information is started, the second application B is started (step SG11), and the transferred setting information is reflected in the setting information area of the file of the second application B (step SG12). When the reflection is over, or when the writing of the setting information is finished, setting items are displayed on the screen. The user can confirm the set items on the screen. At the same time, an inquiry button to ask whether to return to the application A is also displayed (step SG14). When the operation button to return to the application A is touched, step SG3 takes place. At this time, the operation button to ask whether to execute the application B is also displayed on the screen. When the user selects "Execute application B" by touching the operation button, the application B is executed.

The above operations are executed mainly by the setting information processor 722. A setting information transfer program may be previously stored in the user terminal. The first and second application files include a processing program to transfer and receive the setting information, and the setting information processor 722 may respond to the processing program.

The embodiments have been explained herein by way of example only, and are not intended to limit the scope of the invention. The novel embodiments described herein may be realized in a variety of other forms; furthermore, various omissions, substitutions and changes in the form of the methods and systems described herein may be made without departing from the spirit of the invention. The accompanying claims and their equivalents are intended to cover such forms or modifications as would fall within the scope and spirit of the invention.

## Claims

1. A user terminal which accepts an application file, and manages the accepted application file by an application manager, the application file including setting information, and operates a plurality of devices via a network, **characterized by** comprising:
a data transceiver (770) configured to accept a newly application file; and
a setting information processor (722) configured to transfer and copy setting information described in a setting information area of an existent application file, to a corresponding setting information area of the newly application file.

2. The user terminal according to claim 1, **characterized in that** the newly and existent application files include an address conversion command to describe the setting information, and the setting information processor refers to the command.

3. The user terminal according to claim 2, **characterized by** further comprising a phone signal processor (703).

4. The user terminal according to claim 1, **characterized in that** the newly and existent application files include a processing program for transferring and receiving the setting information, and the setting information processor responds to the processing program.

5. A method of managing applications of a user terminal which accepts an application file, manages the accepted application file by an application manager, the application file including setting information, and operates a plurality of devices via a network, **characterized by** comprising:
accepting a newly application file;
copying setting information described in a setting information area of an existent application file, to a corresponding setting information area of the newly application file.

6. The method according to claim 5, **characterized in that** the newly and existent application files include an address conversion command to describe the setting information, and the copying is performed by referring to the command.

7. The method according to claim 5, **characterized in that** the newly and existent application files include a processing program for transferring and receiving the setting information, and the setting information processor responds to the processing program.
